# EUROPEAN PATENT APPLICATION

(11) **EP 3 868 827 A1**
(43) Date of publication of application: **25.08.2021**
(21) Application number: 19874601.8
(22) Date of filing: 27.09.2019
(51) Int. Cl.: C08L 63/00, C08K 3/013, C08K 3/38, C08K 5/51, C08K 5/5425

(54) **RESIN COMPOSITION**

(30) Priority: 16.10.2018 JP 2018194932
(71) Applicant: Nitto Shinko Corporation, Sakai-shi, Fukui 910-0381 (JP)
(72) Inventor: TABUCHI, Akihiro, Sakai-shi, Fukui 910-0381 (JP); INAGAKI, Tatsuya, Sakai-shi, Fukui 910-0381 (JP)
(74) Representative: Stolmár & Partner Patentanwälte PartG mbB
(86) International application number: PCT/JP2019/038266
(87) International publication number: WO 2020/080069

(57) **Abstract**

Provided in the present invention is a resin composition including an epoxy resin, a specific coupling agent, and an inorganic filler.

## Description

### CROSS-REFERENCE TO RELATED APPLICATION

This application claims priority to Japanese Patent Application No. 2018-194932, the disclosure of which is incorporated herein by reference in its entirety.

### FIELD

The present invention relates to a resin composition.

### BACKGROUND

Conventionally, a resin composition including an epoxy resin and an inorganic filler has been used in the field of electronics.

Patent Literature 1 below discloses that a cured product obtained by curing a resin composition including an epoxy resin and an inorganic filler is used as a heat dissipation sheet. Such a heat dissipation sheet includes a relatively large amount of inorganic filler such as a boron nitride filler, and thus has heat dissipation performance.

### CITATION LIST

### Patent Literature

Patent Literature 1: JP 2010-094887 A

### SUMMARY

### Technical Problem

However, the resin composition disclosed in Patent Literature 1 includes a particulate inorganic filler, and thus has a problem of not necessarily securing sufficient adhesive strength to an adherend when it is formed into a cured product.

It is therefore an object of the present invention to provide a resin composition capable of sufficiently securing adhesive strength to an adherend when formed into a cured product.

### Solution to Problem

The resin composition according to the present invention is a resin composition including: an epoxy resin; a coupling agent; and an inorganic filler, wherein the coupling agent is at least one selected from the group consisting of a compound represented by a general formula (1) below, a compound represented by a general formula (2), and a compound represented by a general formula (3). 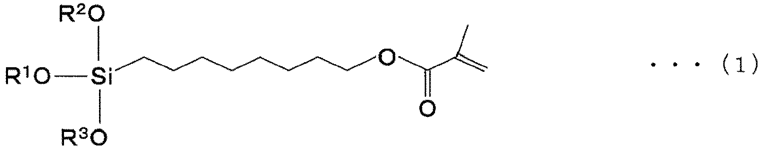 (where R¹, R², and R³ in the general formula (1) are respectively CH₃ or C₂H₅.) 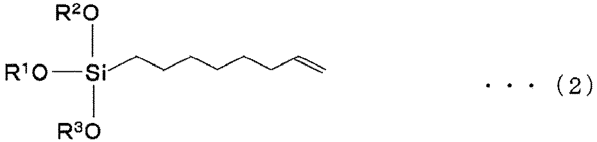 (where R¹, R², and R³ in the general formula (2) are respectively CH₃ or C₂H₅.) 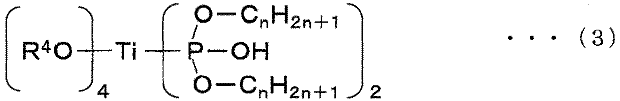 (where, in the general formula (3), n is an integer of 13 to 19, and each R⁴ is independently an alkyl group or an alkyl ether group having 8 to 12 carbon atoms, in which an alkyl moiety is a linear saturated hydrocarbon or a branched hydrocarbon including an unsaturated bond.)

### DESCRIPTION OF EMBODIMENTS

Hereinafter, an embodiment of the present invention will be described.

A resin composition according to this embodiment includes a component that finally forms a cured product. That is, the resin composition according to this embodiment includes a polymerizable component that forms a cured resin by polymerization. The resin composition according to this embodiment includes an inorganic filler to allow the cured product after curing to have good thermal conductivity. Further, the resin composition according to this embodiment includes a coupling agent that acts to bond the polymerizable component and the inorganic filler to each other. The resin composition according to this embodiment may include an additive commonly used as a plastic compounding chemical without impairing the effect of the present invention.

In the resin composition according to this embodiment, the content ratio of the polymerizable component is preferably 10 mass % or more and 70 mass % or less, more preferably 30 mass % or more and 40 mass % or less.

The cured product obtained by curing the resin composition according to this embodiment includes preferably 10 volume % or more and 60 volume % or less, more preferably 40 volume % or more and 50 volume % or less, of the inorganic filler when the solid content thereof is 100 volume %. In addition, the resin composition according to this embodiment includes preferably 30 mass parts or more and 90 mass parts or less, more preferably 60 mass parts or more and 70 mass parts or less, of the inorganic filler based on 100 mass parts of the polymerizable component, in terms of allowing the content ratio of the inorganic filler in the cured product to easily fall within the above range.

The resin composition according to this embodiment includes 0.01 mass part or more and 0.03 mass part or less of the coupling agent based on 100 mass parts of the inorganic filler.

Further, the resin composition according to this embodiment includes preferably 0.005 mass part or more and 0.05 mass part or less, more preferably 0.01 mass part or more and 0.03 mass part or less, of the additive based on 100 mass parts of the inorganic filler.

The resin composition according to this embodiment includes, as the polymerizable component, an epoxy resin and a curing agent for the epoxy resin. In this embodiment, the epoxy resin is cured with the curing agent for the epoxy resin to thereby form a cured resin.

The ratio of the total amount of the epoxy resin and the curing agent for the epoxy resin to the polymerizable component is preferably 80 mass % or more and 100 mass % or less, more preferably 90 mass % or more and 100 mass % or less.

The ratio of the equivalent weight of the curing agent for the epoxy resin to the equivalent weight of the epoxy resin is preferably 1/2 or more and 2/1 or less, more preferably 2/3 or more and 3/2 or less.

The epoxy resin has a plurality of epoxy groups in its molecular structure. Examples of the epoxy resin include a bisphenol A epoxy resin, a novolac epoxy resin, an alicyclic epoxy resin, a long-chain aliphatic epoxy resin, a glycidyl ester epoxy resin, and a glycidylamine epoxy resin.

Examples of the curing agent for the epoxy resin include an amine-based curing agent, a phenolic curing agent, and an acid anhydride. Examples of the amine-based curing agent include diaminodiphenylsulfone, dicyandiamide, diaminodiphenylmethane, and triethylenetetramine. Examples of the phenolic curing agent include a phenol novolac resin, an aralkyl phenol resin, a dicyclopentadiene modified phenol resin, a naphthalene phenol resin, and a bisphenol phenol resin. Examples of the acid anhydride include phthalic anhydride, trimellitic anhydride, and maleic anhydride.

Examples of the inorganic filler include a boron nitride filler, an aluminum nitride filler, a silica nitride filler, a gallium nitride filler, an alumina filler, a silicon carbide filler, a silicon dioxide filler, a magnesium oxide filler, and a diamond filler.

The resin composition according to this embodiment preferably includes, as the inorganic filler, a boron nitride filler excellent in thermal conductivity. The boron nitride filler is excellent in thermal conductivity, but has a relatively few surface functional groups (e.g., OH) that are involved in polymerization. Thus, the resin composition including the boron nitride filler but not including the coupling agent is difficult in increasing an affinity between the polymerizable component and the boron nitride filler since the boron nitride filler has a few surface functional groups. In this regard, the resin composition according to this embodiment includes the coupling agent. The coupling agent has a functional group having an affinity for a surface functional group of the inorganic filler, and a functional group having an affinity for a functional group of the polymerizable component, as will be described later. Accordingly, the coupling agent can act to bond the polymerizable component and the boron nitride filler to each other even in the case where the resin composition includes the boron nitride filler having a few surface functional groups. As a result, the cured product when formed from the resin composition according to this embodiment has an increased cohesive failure strength. Thus, the cured product when formed from the resin composition according to this embodiment can have an increased cohesive failure strength while having an increased thermal conductivity in the case where the boron nitride filler excellent in thermal conductivity is included as the inorganic filler. Further, the thermal conductivity and the cohesive failure strength of the cured product when so formed can be adjusted by changing the content of the boron nitride filler.

It is important that the resin composition according to this embodiment includes, as the coupling agent, at least one selected from a group consisting of a silane coupling agent of a general formula (1) below, a silane coupling agent of a general formula (2) below, and a titanate coupling agent of a general formula (3) below. In the general formulae (1) and (2) below, R¹, R², and R³ are respectively CH₃ or C₂H₅. In the general formula (3), n is an integer of 13 to 19, and each R⁴ is independently an alkyl group or an alkyl ether group having 8 to 12 carbon atoms, in which an alkyl moiety is a linear saturated hydrocarbon or a branched hydrocarbon including an unsaturated bond. As the silane coupling agent and the titanate coupling agent, those commercially available can be used.

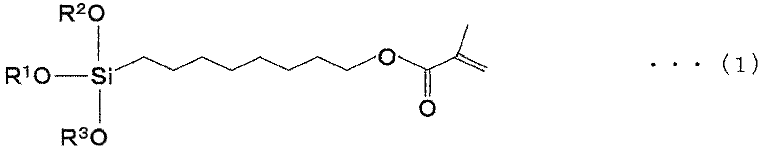

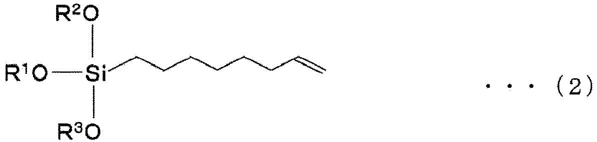

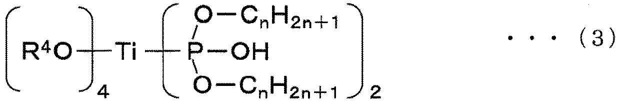

In the general formula (3) above, R⁴ may have a quaternary carbon atom, an alkyl ether group, and two ethylenic unsaturated groups. R₄ may have 12 carbon atoms. In the general formula (3) above, n is preferably 13 or 19.

In the resin composition according to this embodiment, at least a part of the coupling agent undergoes a hydrolysis reaction, and further reacts with the functional groups on the surface of the inorganic filler to thereby subject the inorganic filler to surface treatment.

In the silane coupling agent of each of the general formula (1) and the general formula (2) above, the functional groups (OR¹ group, OR² group, and OR³ group) on one end side of the carbon chain have an affinity with the surface functional groups of the inorganic filler. Further, the functional group on the other end side of the carbon chain (i.e., a methacrylic group in the formula (1) above and a vinyl group in the formula (2) above) has an affinity for a functional group of the polymerizable component. Thus, in the resin composition according to this embodiment, the silane coupling agent of the formula (1) or (2) above can act to bond the polymerizable component and the inorganic filler to each other. Specifically, a functional group on one end side of the carbon chain of the silane coupling agent of the general formula (1) or the general formula (2) above is disposed near the surface of the inorganic filler, and further a functional group on the other end side of the carbon chain of the silane coupling agent is disposed near a functional group of the polymerizable component, whereby the polymerizable component and the inorganic filler are bonded to each other via the silane coupling agent.

More specifically, the resin composition according to this embodiment includes a silane coupling agent having a relatively long linear portion of the carbon chain. The linear portion of the carbon chain is a portion in which a silicon atom and a methacrylic group are bonded to each other in the general formula (1) above, and is a portion in which a silicon atom and a vinyl group are bonded to each other in the formula (2) above. Inclusion of such a silane coupling agent can increase a length from one end side to the other end side of the carbon chain of the silane coupling agent disposed near the surface of the inorganic filler. This configuration can obtain a larger space in which the functional group of the polymerizable component is accessible to the functional group on the other end side of the carbon chain, than in the case where a silane coupling agent having a short carbon chain from one end to the other end thereof is included. Accordingly, the functional group of the polymerizable component can be more reliably made close to the functional group on the other end side of the carbon chain. Thus, the action of bonding the inorganic filler and the polymerizable component to each other can be more reliably fulfilled. This can increase the cohesive failure strength of the cured product after curing.

Use of the silane coupling agent having a relatively long linear portion of the carbon chain as in the general formula (1) and the general formula (2) above can increase a length from one end side to the other end side of the carbon chain of the silane coupling agent, as aforementioned. Thus, it is possible to increase the interval (free interval) between the polymerizable component and the inorganic filler, as compared with the case where a silane coupling agent having a short carbon chain from one end to the other end thereof is included.

It can be said that the titanate coupling agent of the general formula (3) above also exhibits the same action as described above. Further, since the titanate coupling agent of the general formula (3) above includes a P-OH group excellent in affinity for a metal in a molecule, the cured product after curing can have better adhesiveness to an adherend including a metal.

As the silane coupling agent of the general formula (1) above, a silane coupling agent of a formula (1)' below is preferable, and as the silane coupling agent of the general formula (2) above, a silane coupling agent of a formula (2)' below is preferable.

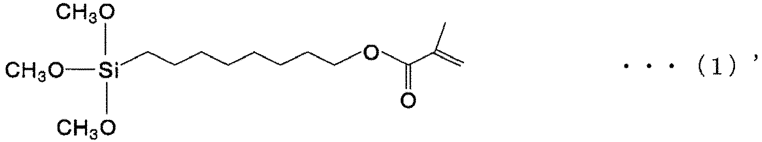

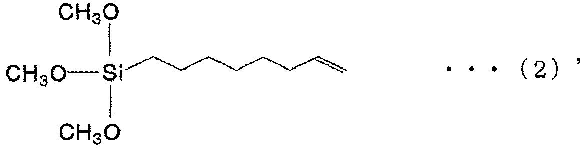

As the titanate coupling agent of the general formula (3) above, at least one of titanate coupling agents of a formula (3)' below and a formula (3)" below is preferable. In the formula (3)' below and the formula (3)", n may be 13 or 19.

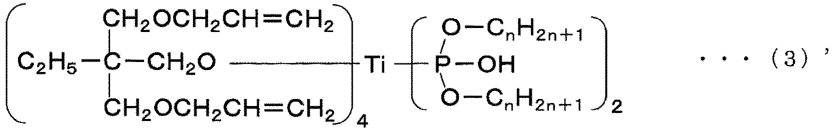

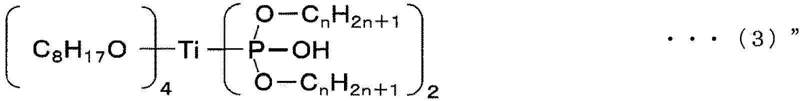

The present inventors infer that, when the resin composition according to this embodiment is formed into a cured product, the resin composition can increase peel strength of the cured product to an adherend since it appears to have the characteristics as aforementioned.

The silane coupling agent having a structure shown in a formula (4) below is not preferable even if it is a silane coupling agent having a relatively long linear portion of the carbon chain. In other words, it is preferable that the resin composition according to this embodiment do not include a silane coupling agent including hydrogen (H) bonded to nitrogen (N) in its molecule. 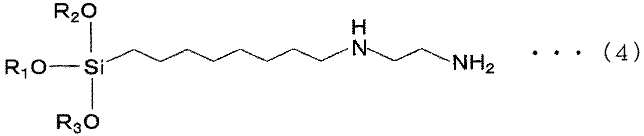 (In the formula (4) above, R¹, R², and R³ are respectively CH₃ or C₂H₅.)

When the resin composition includes the silane coupling agent having a structure shown in the general formula (4) above, the resin composition has extremely high viscosity (i.e., the resin composition becomes too viscous) at a temperature of about room temperature (for example 25 °C). This is considered to be caused by the functional group on the other end side of the carbon chain of the silane coupling agent (i.e., the amino group in the general formula (4) above) acting as a curing agent for the polymerizable component at a temperature of about room temperature to initiate curing of the polymerizable component. The resin composition having extremely high viscosity as described above is difficult to be molded into a molded product having a certain shape (for example a sheet shape), and is thus not preferable. Therefore, it is important to use, as the coupling agent, a coupling agent having a relatively long linear portion of the carbon chain and hardly acting as a curing agent for the polymerizable component at a temperature of about room temperature, as described above.

Examples of the additive include a curing accelerator that accelerates a curing reaction between the epoxy resin and the curing agent for the epoxy resin, and include a dispersant, a tackifier, an antiaging agent, an antioxidant, a processing aid, a stabilizer, a defoamer, a flame retardant, a thickener, and a pigment.

Examples of the curing accelerator include tetraphenylphosphonium tetraphenylborate (Tetraphenylphosphonium tetraphenylborate), imidazoles, triphenylphosphate (TPP), and amine-based curing accelerators. Examples of the amine-based curing accelerator include boron trifluoride monoethylamine and the like.

The resin composition according to this embodiment includes preferably 0.5 mass parts or more and 1.5 mass parts or less, more preferably 0.5 mass parts or more and 1.0 mass parts or less, of the curing accelerator based on 100 mass parts of the total of the epoxy resin and the curing agent for the epoxy resin.

The resin composition according to this embodiment may be in the state of not being fully cured although its curing reaction has proceeded to some extent. In other words, the resin composition may be in the state where its curing reaction has proceeded in a part thereof. For example, the state may be such that the resin composition in a state of having fluidity is coated into a sheet form, and is thereafter partially cured. The resin composition according to this embodiment, even in the state where its curing reaction has partially proceeded, still includes the aforementioned epoxy resin, the aforementioned specific coupling agent, and the aforementioned inorganic filler.

As a material of the adherend, a metal is preferable. More specifically, a metal including copper or aluminum is preferable.

The resin composition according to this embodiment can be cured into a sheet form to be used for a metal base circuit board. The metal base circuit board is formed, for example, by bonding a circuit layer to the sheet-shaped cured product. The thus configured metal base circuit board having the sheet-shaped cured product is also excellent in thermal conductivity.

Further, the resin composition according to this embodiment is cured into a sheet form to be used, for example, for a power module. The power module is formed, for example, by mounting heating elements such as semiconductor chips or power ICs on the circuit layer of the metal base circuit board, once sealing these elements with silicone gel, and further performing resin molding on the silicone gel. The thus configured power module having the sheet cured product is also excellent in thermal conductivity.

The resin composition according to this embodiment is configured as described above, and thus has the following advantages.

That is, the resin composition according to the present invention is a resin composition including: an epoxy resin; a coupling agent; and an inorganic filler, wherein the coupling agent is at least one selected from the group consisting of a compound represented by a general formula (1) below, a compound represented by a general formula (2), and a compound represented by a general formula (3). 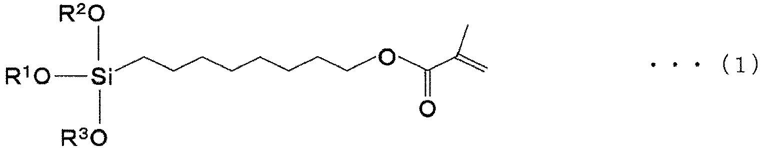 (where R¹, R², and R³ in the general formula (1) are respectively CH₃ or C₂H₅.) 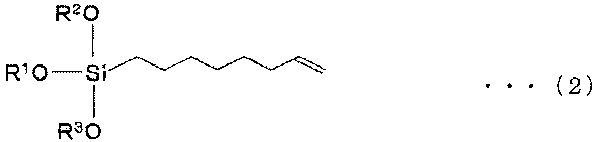 (where R¹, R², and R³ in the general formula (2) are respectively CH₃ or C₂H₅.) 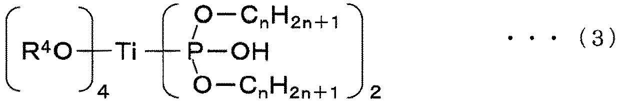 (where, in the general formula (3), n is an integer of 13 to 19, and each R⁴ is independently an alkyl group or an alkyl ether group having 8 to 12 carbon atoms, in which an alkyl moiety is a linear saturated hydrocarbon or a branched hydrocarbon including an unsaturated bond.)

The resin composition according to this embodiment can sufficiently secure adhesive strength to an adherend when formed into a cured product.

The resin composition according to the present invention is not limited to the aforementioned embodiment. Further, the resin composition according to the present invention is not limited by the aforementioned operational effects, either. Various modifications can be made to the resin composition according to the present invention without departing from the gist of the present invention.

### EXAMPLES

Next, the present invention will be described more specifically by way of Examples and Comparative Example.

### (Example 1)

A resin composition was obtained by mixing together the following epoxy resin, the following curing agent, the following curing accelerator, the following silane coupling agent, and the following inorganic filler:
Epoxy resin: Bis A epoxy resin
Curing agent: Novolac phenolic resin
Curing accelerator: Tetraphenylphosphonium tetraphenylborate (TPP-K (registered trademark), manufactured by HOKKO CHEMICAL INDUSTRY CO., LTD.)
Silane coupling agent: Silane coupling agent of the formula (1)' below (compound name: 8-methacryloxyoctyltrimethoxysilane, commercially available product)
Inorganic filler: Boron nitride filler (BN filler)

The epoxy resin and the curing agent were included in the resin composition at an equivalent ratio of 1:1. Further, 0.01 mass part of the curing accelerator was included in the resin composition based on 100 mass parts of the total of the epoxy resin and the curing agent. The inorganic filler was included in the resin composition so that the content ratio of the inorganic filler was 59 volume % when the solid content of the cured product of the resin composition was 100 volume % after curing of the resin composition. Further, 0.015 mass % of the silane coupling agent was included based on the mass of the inorganic filler included in the resin composition.

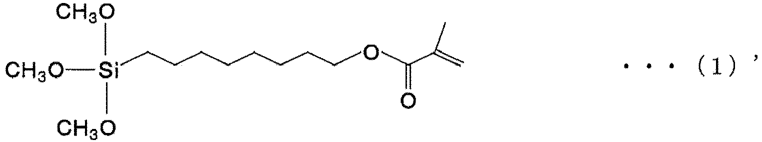

### (Example 2)

A resin composition was obtained in the same manner as in Example 1, except that a silane coupling agent of the formula (2)' below (compound name: 7-octenyltrimethoxysilane, commercially available product) was used as a silane coupling agent.

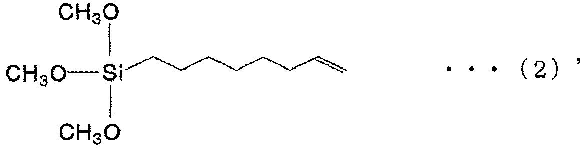

### (Example 3)

A resin composition was obtained in the same manner as in Example 1, except that a titanate coupling agent of the formula (3)' below (compound name: tetra(2,2-diallyloxymethyl-1-butyl)bis(ditridecyl)phosphite titanate, commercially available product) was used instead of a silane coupling agent.

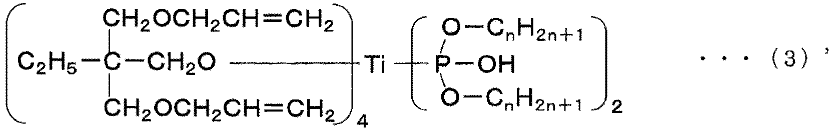

### (Example 4)

A resin composition was obtained in the same manner as in Example 1, except that a titanate coupling agent of the formula (3)" below (compound name: tetraoctylbis (ditridecylphosphite) titanate, commercially available product) was used instead of a silane coupling agent.

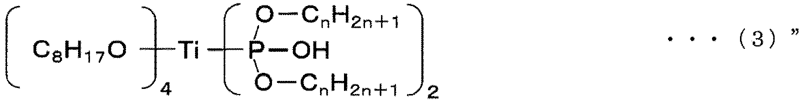

### (Comparative Example)

A resin composition was obtained in the same manner as in Example 1, except that a silane coupling agent of a formula (5) below (compound name: 3-glycidoxypropyltrimethoxysilane, commercially available product) was used as a silane coupling agent.

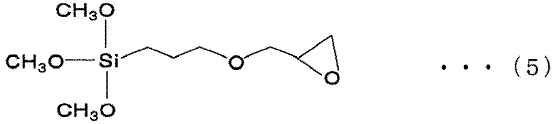

### <Peel test>

The resin composition of each of the Examples and the Comparative Example was applied to one side of each of electrolytic copper foils (each having a thickness of 35 pm) to prepare two sheets each having a resin layer (thickness of 145 µm). Next, the two sheets were hot-pressed (3.0 MPa, 120 °C, 20 mins) to bond the resin layers to each other, and one copper foil was peeled off from the back side of one of the sheets. Then, an aluminum plate was placed on the surface of the sheet from which the copper foil had been peeled off, and was subjected to hot-pressing (2.0 MPa, 120 °C, 20 mins) to transfer the sheet to the aluminum plate, and then the copper foil was further peeled off from the other sheet to obtain a semi-cured sheet. Next, an adherend (copper foil, 1 oz) was laminated on this semi-cured sheet to integrate the resin layer and the adherend together by hot-pressing (2.0 MPa, 180 °C, 120 mins), and the resin layer was sufficiently cured. After curing, the integrated body of the resin layer and the adherend was cut into a 20 mm × 10mm piece. The adherend of the cut piece was processed (etched) to a width of 10 mm to make a test piece for the peel test. The test piece was subjected to a 90° peel test at a peeling speed of 50 mm/min, and the adhesion strength between the adherend and the resin layer was evaluated by peel strength. Table 1 below shows the results. In Table 1 below, the Aves (average values) each obtained by arithmetically averaging the values from six tests are shown as peel strength.

**Table 1**

| | | C. Example | Example 1 | Example 2 | Example 3 | Example 4 |
|---|---|---|---|---|---|---|
| 1 oz Cu peel strength (N/cm) | N=1 | 2.0 | 2.5 | 2.5 | 3.2 | 3.3 |
| | N=2 | 2.0 | 2.5 | 2.6 | 3.2 | 3.4 |
| | N=3 | 2.0 | 2.5 | 2.5 | 3.2 | 3.4 |
| | N=4 | 2.0 | 2.7 | 2.5 | 2.9 | 3.1 |
| | N=5 | 2.0 | 2.6 | 2.6 | 2.9 | 3.3 |
| | N=6 | 2.0 | 2.7 | 2.7 | 3.0 | 3.5 |
| | Ave | 2.0 | 2.6 | 2.6 | 3.1 | 3.3 |

As shown in Table 1, it could be confirmed that in each of the resin compositions of Example 1 and Example 2, the cured product had peel strength higher by about 30% than that of the resin composition of Comparative Example. In addition, it could be confirmed that in each of the resin compositions of Example 3 and Example 4, the cured product had peel strength higher by 55% or more than that of the resin composition of Comparative Example. The thermal conductivity was 11 W/mK in all Examples and the Comparative Example. As described above, it is considered that the specific coupling agent in each of Examples could increase the cohesive failure strength of the cured product after curing. It is considered that the suppression of cohesive failure that suppresses the destruction of the cured product itself allows the peel strength at the interface between the adherend and the cured product to be directly reflected in adhesive force.

## Claims

1. A resin composition comprising:
an epoxy resin;
a coupling agent; and
an inorganic filler, wherein
the coupling agent is at least one selected from the group consisting of a compound represented by a general formula (1) below, a compound represented by a general formula (2), and a compound represented by a general formula (3): 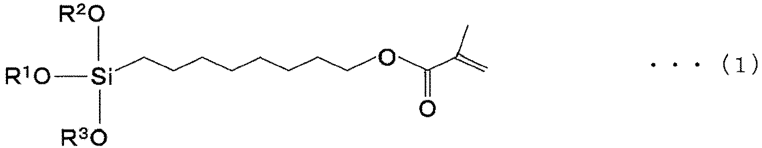 (where R¹, R², and R³ in the general formula (2) are respectively CH₃ or C₂H₅.) 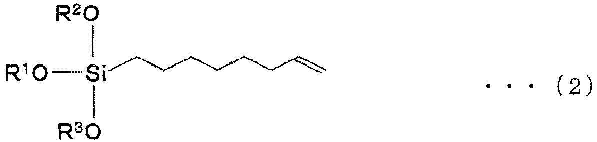 (where R¹, R², and R³ in the general formula (2) are respectively CH₃ or C₂H₅.) 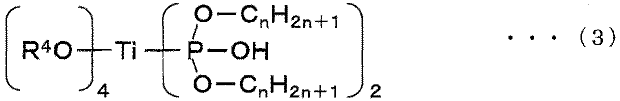 (where, in the general formula (3), n is an integer of 13 to 19, and each R⁴ is independently an alkyl group or an alkyl ether group having 8 to 12 carbon atoms, in which an alkyl moiety is a linear saturated hydrocarbon or a branched hydrocarbon including an unsaturated bond.)

2. The resin composition according to claim 1, wherein
the coupling agent is the compound represented by the general formula (3).

3. The resin composition according to claim 1 or 2, wherein the inorganic filler is a boron nitride filler.
